# EUROPEAN PATENT APPLICATION

(11) **EP 4 170 518 A1**
(43) Date of publication of application: **26.04.2023**
(21) Application number: 21828134.3
(22) Date of filing: 22.06.2021
(51) Int. Cl.: G06F 16/27

(54) **DISTRIBUTED TRANSACTION PROCESSING METHOD, TERMINAL AND COMPUTER READABLE STORAGE MEDIUM**

(30) Priority: 22.06.2020 CN 202010576647
(71) Applicant: ZTE Corporation, Shenzhen, Guangdong 518057 (CN)
(72) Inventor: SUI, Jian, Shenzhen, Guangdong 518057 (CN); LU, Qinyuan, Shenzhen, Guangdong 518057 (CN); JING, Wenwen, Shenzhen, Guangdong 518057 (CN)
(74) Representative: Canzler & Bergmeier Patentanwälte Partnerschaft mbB
(86) International application number: PCT/CN2021/101470
(87) International publication number: WO 2021/259240

(57) **Abstract**

A distributed transaction processing method, a terminal and a computer readable storage medium. The method comprises: a global transaction management master node synchronizes an incremental message of distributed transaction unique identification information to a computing node, the distributed transaction unique identification information being set by the global transaction management master node (S101); the computing node obtains distributed transaction unique identification information of data to be operated from a storage node, and verifies said data (S102); process said data according to the verification result (S103).

## Description

### TECHNICAL FIELD

The present disclosure relates to, but is not limited to, the distributed transaction processing field, and particularly relates to a distributed transaction processing method, a terminal, and a storage medium.

### BACKGROUND

As distributed database products become more and more on the market, competition among the products is fierce, and a high-performance concurrent processing scheme for distributed transactions is the core competitiveness. In the related technology, a computing node needs to repeatedly confirm whether a currently processed transaction is active with a global transaction management master node, resulting in large pressure of network traffic between the computing node and the global transaction management master node. Meanwhile, the computing node also needs to repeatedly acquire data to be operated from a storage node.

### SUMMARY

How to reduce the number of times of interactions between the computing node and the global transaction management master node in a distributed database, shorten time for processing distributed transactions, improve concurrency of the computing node, and save CPU usage of the computing node so as to effectively improve distributed transaction processing performance becomes urgent problems to be solved.

The present disclosure provides a distributed transaction processing method, including: synchronizing, by a global transaction management master node, an incremental message of unique identifier information of a distributed transaction to a computing node, with the unique identifier information of the distributed transaction set by the global transaction management master node; acquiring, by the computing node, unique identifier information of a distributed transaction of data to be operated from a storage node, and verifying, by the computing node, the data to be operated; and processing the data to be operated according to a verification result.

The present disclosure further provides a terminal, including a processor and a memory, and the processor is configured to execute one or more computer programs stored in the memory to perform the distributed transaction processing method provided by the present disclosure.

The present disclosure further provides a computer-readable storage medium having stored thereon one or more computer programs, which are executable by one or more processors to implement the distributed transaction processing method provided by the present disclosure.

### BRIEF DESCRIPTION OF DRAWINGS

FIG. 1 is a basic flowchart illustrating a distributed transaction processing method according to the present disclosure;
FIG. 2 is a schematic structural diagram illustrating a global transaction management master node synchronizing an incremental message to all computing nodes and a standby node simultaneously according to the present disclosure;
FIG. 3 is a schematic diagram illustrating interactions between all nodes in a distributed transaction processing process according to the present disclosure;
FIG. 4 is a flowchart illustrating a distributed transaction processing method according to the present disclosure; and
FIG. 5 is a schematic structural diagram of a terminal according to the present disclosure.

### DETAIL DESCRIPTION OF EMBODIMENTS

In order to make the objectives, technical solutions and advantages of the present disclosure clearer, the embodiments of the present disclosure are further described in detail below in conjunction with specific implementations and the drawings. It should be understood that the specific embodiments described herein are merely intended to explain the present disclosure, rather than limiting the present disclosure.

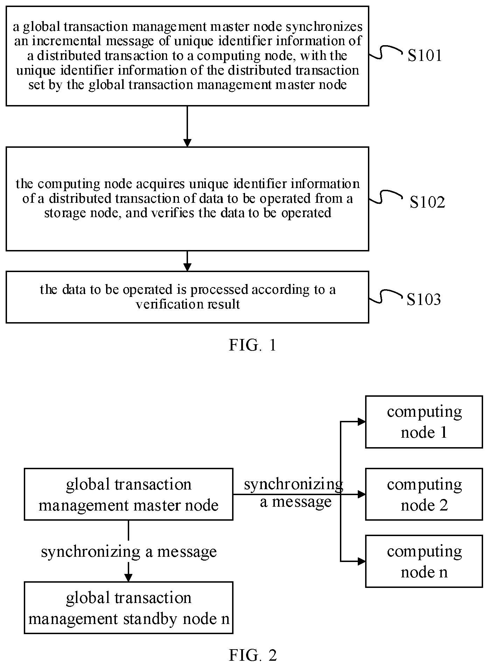

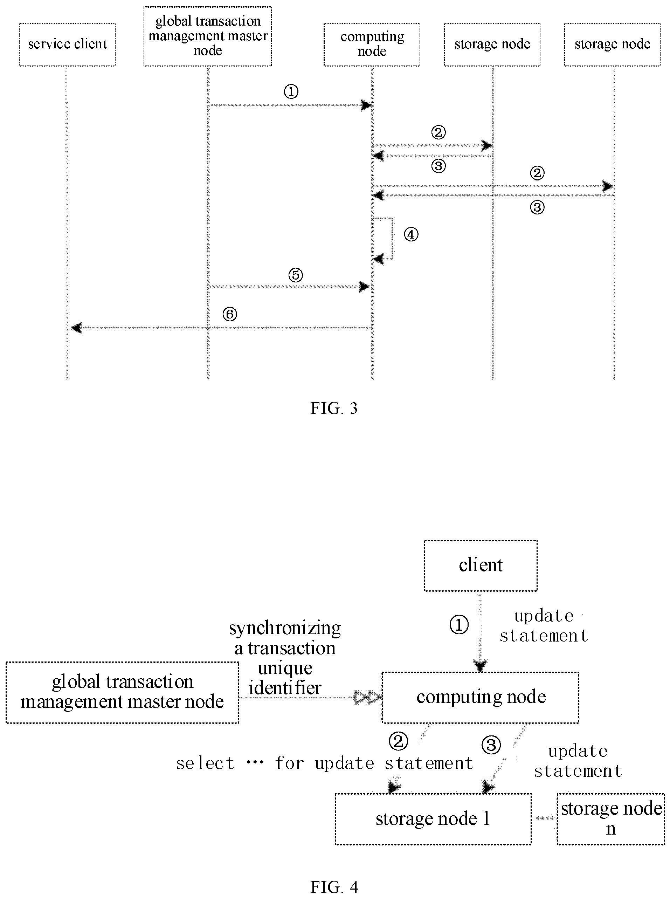

In order to reduce the number of times of interactions between a computing node and a global transaction management master node in a distributed database, an embodiment of the present disclosure provides a distributed transaction processing method. FIG. 3 is a schematic diagram illustrating interactions between all nodes in a distributed transaction processing process according to the present disclosure. FIG. 1 is a basic flowchart illustrating the distributed transaction processing method according to the present disclosure, and the method includes operations S101 to S103.

In operation S101, a global transaction management master node synchronizes an incremental message of unique identifier information of a distributed transaction to a computing node, with the unique identifier information of the distributed transaction set by the global transaction management master node.

It should be understood that unique identifier information of all distributed transactions is generated on the global transaction management master node for identifying different transactions. The incremental message of the unique identifier information of the distributed transaction includes: an addition message of the unique identifier information of the distributed transaction, and a release message of the unique identifier information of the distributed transaction. When the computing node locally acquires the release message of the unique identifier information of the distributed transaction through synchronization, it is indicated that the transaction is in an inactive state, that is, the computing node may directly operate the transaction.

FIG. 2 is a schematic structural diagram illustrating the global transaction management master node synchronizing the incremental message to all computing nodes and a standby node simultaneously. As shown in FIG. 2, the global transaction management master node synchronizes the incremental message of the unique identifier information of the distributed transaction to the standby node in real time while the global transaction management master node is synchronizing the incremental message of the unique identifier information of the distributed transaction to all the computing nodes in real time.

The global transaction management node has high usability. The method may be applied to a mode of one master node plus multiple standby nodes, and may also be applied to a mode of multiple master nodes plus multiple standby nodes. The computing node merely acquires the unique identifier information of the distributed transaction from the global transaction management master node through the synchronization, but is not used as the standby node.

In operation S102, the computing node acquires unique identifier information of a distributed transaction of data to be operated from a storage node, and verifies the data to be operated.

The operation of verifying the data to be operated may include: acquiring, by the computing node, a list of unique identifier information of active distributed transactions according to the incremental message of the unique identifier information of the distributed transaction locally acquired through the synchronization; and determining, by the computing node, whether the unique identifier information of the distributed transaction of the data to be operated is in the list of unique identifier information of active distributed transactions.

In operation S103, the data to be operated is processed according to a verification result.

When the unique identifier information of the distributed transaction of the data to be operated is not in the list of unique identifier information of active distributed transactions, the computing node directly operates the data to be operated or directly returns the data to be operated to a client.

When the unique identifier information of the distributed transaction of the data to be operated is in the list of unique identifier information of active distributed transactions, the computing node suspends the transaction corresponding to the data to be operated.

A time threshold t is set. After the computing node suspends the transaction corresponding to the data to be operated, if the computing node receives, within the time threshold t, a release message of the unique identifier information of the distributed transaction of the data to be operated synchronized by the global transaction management master node, which indicates that the unique identifier information of the distributed transaction of the data to be operated is not in the list of unique identifier information of active distributed transactions, the computing node directly operates the data to be operated or directly returns the data to be operated to the client.

After the computing node suspends the transaction corresponding to the data to be operated, if the computing node does not receive, within the time threshold t, the release message of the unique identifier information of the distributed transaction of the data to be operated synchronized by the global transaction management master node, the computing node returns a timeout error message to the client.

According to the distributed transaction processing method provided by the present disclosure, the global transaction management master node synchronizes the incremental message of the unique identifier information of the distributed transaction to the computing node in real time, and the computing node acquires the unique identifier information of the distributed transaction of the data to be operated from the storage node, verifies the data to be operated according to the locally stored list of unique identifier information of distributed transactions, and processes the data to be operated according to the verification result. Thus, the number of times of the interactions between the computing node and the global transaction management master node in the distributed database is reduced. By synchronizing the incremental message of the unique identifier information of the distributed transaction to the computing node by the global transaction management master node, the computing node does not need to repeatedly acquire the unique identifier information of the data to be operated from the global transaction management master node, so that the problem that a transaction delay is increased due to repeated inquiring about unique identifiers of active transactions by the computing node is solved, service concurrent performance is significantly improved, the pressure of network traffic between the computing node and the global transaction management master node is greatly reduced, and a pressure of network traffic of the computing node is thus reduced. When it is obtained through the verification that the unique identifier information of the distributed transaction of the data to be operated is in the list of unique identifier information of active distributed transactions, the computing node suspends the transaction corresponding to the data to be operated, thereby obviating the need to repeatedly acquire the data from the storage node.

The present disclosure is further illustrated by taking the client sending an update statement to the computing node as an example. As shown in FIG. 4, in this example, the distributed transaction processing method includes the following operations 1 to 3.

In operation 1, the client sends an "update" statement (the same for a delete statement or a select statement) to the computing node.

In operation 2, the computing node generates a "select ... for update" statement for a "where" condition according to the "where" condition of the "update" statement, and the "select ... for update" statement is mainly configured to find a value of a unique identifier of a distributed transaction corresponding to a row to be updated on the storage node. The value of the unique identifier is then verified and compared with a local list of unique identifiers of active distributed transactions. If the unique identifier of the distributed transaction corresponding to the row to be updated on the storage node is in an active state, the "update" operation is suspended, that is, execution of the transaction is temporarily stopped until a release signal for the unique identifier synchronized by the global transaction management master node is received.

In operation 3, when the computing node determines that the unique identifier of the distributed transaction corresponding to the row to be updated on the storage node is not active or receives the release signal for the unique identifier, the computing node continues to execute the "update" statement to modify the data on the storage node.

According to the distributed transaction processing method provided by the present disclosure, the global transaction management master node synchronizes the incremental message of the unique identifier information of the distributed transaction to the computing node in real time, and the computing node acquires the unique identifier information of the distributed transaction of the data to be operated from the storage node, verifies the data to be operated according to the locally stored list of unique identifier information of distributed transactions, and processes the data to be operated according to the verification result. Thus, the number of times of the interactions between the computing node and the global transaction management master node in the distributed database is reduced. By synchronizing the incremental message of the unique identifier information of the distributed transaction to the computing node by the global transaction management master node, the computing node does not need to repeatedly acquire the unique identifier information of the data to be operated from the global transaction management master node, so that the problem that a transaction delay is increased due to repeated inquiring about unique identifiers of active transactions by the computing node is solved, service concurrent performance is significantly improved, the pressure of network traffic between the computing node and the global transaction management master node is greatly reduced, and a pressure of network traffic of the computing node is thus reduced. When it is obtained through the verification that the unique identifier information of the distributed transaction of the data to be operated is in the list of unique identifier information of active distributed transactions, the computing node suspends the transaction corresponding to the data to be operated, thereby obviating the need to repeatedly acquire the data from the storage node.

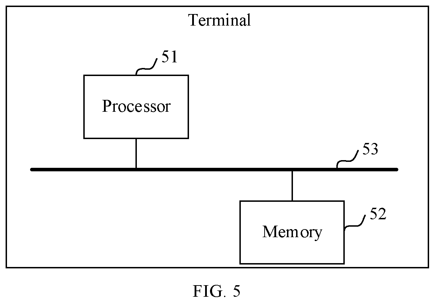

The present disclosure further provides a terminal, as shown in FIG. 5, including a processor 51, a memory 52, and a communication bus 53.

The communication bus 53 is configured to enable connection and communication between the processor 51 and the memory 52.

The processor 51 is configured to execute one or more computer programs stored in the memory 52 to perform the distributed transaction processing method provided by the present disclosure.

The present disclosure further provides a computer-readable storage medium, including volatile/nonvolatile and removable/non-removable media used in any method or technology for storing information (such as computer-readable instructions, data structures, program modules and other data). The computer-readable storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer.

The computer-readable storage medium in the present disclosure may be configured to store one or more computer programs, which are executable by a processor to perform the distributed transaction processing method provided by the present disclosure.

It should be understood by those of ordinary skill in the art that the functional modules/units in all or some of the operations, the systems, and the devices in the method disclosed above may be implemented as software (which may be implemented as computer program codes executable by a computing device), firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit.

In addition, it is well known by those of ordinary skill in the art that communication media generally include computer-readable instructions, data structures, computer program modules or other data in a modulated data signal, such as a carrier wave or other transmission mechanism, and may include any information delivery medium. Therefore, the present disclosure is not limited to any specific combination of hardware and software.

The above is a further detailed description of the embodiments of the present disclosure in conjunction with the specific implementations, but the specific implementations of the present disclosure are not limited to the above description. Several simple deductions or substitutions can be made by those of ordinary skill in the art without departing from the concept of the present disclosure, and should be considered to fall within the scope of the present disclosure.

## Claims

1. A distributed transaction processing method, comprising:
synchronizing, by a global transaction management master node, an incremental message of unique identifier information of a distributed transaction to a computing node, wherein the unique identifier information of the distributed transaction is set by the global transaction management master node;
acquiring, by the computing node, unique identifier information of a distributed transaction of data to be operated from a storage node, and verifying, by the computing node, the data to be operated; and
processing the data to be operated according to a verification result.

2. The distributed transaction processing method of claim 1, wherein the incremental message of the unique identifier information of the distributed transaction comprises: an addition message of the unique identifier information of the distributed transaction, and a release message of the unique identifier information of the distributed transaction.

3. The distributed transaction processing method of claim 1, wherein the global transaction management master node synchronizes the incremental message of the unique identifier information of the distributed transaction to a standby node when the global transaction management master node synchronizes the incremental message of the unique identifier information of the distributed transaction to the computing node.

4. The distributed transaction processing method of any one of claims 1 to 3, wherein, verifying, by the computing node, the data to be operated comprises:
acquiring, by the computing node, a list of unique identifier information of active distributed transactions according to the incremental message of the unique identifier information of the distributed transaction locally acquired through synchronization; and
determining, by the computing node, whether the unique identifier information of the distributed transaction of the data to be operated is in the list of unique identifier information of active distributed transactions.

5. The distributed transaction processing method of claim 4, wherein processing the data to be operated according to the verification result comprises:
in response to a case where the unique identifier information of the distributed transaction of the data to be operated is not in the list of unique identifier information of active distributed transactions, directly operating the data to be operated or directly returning the data to be operated to a client by the computing node.

6. The distributed transaction processing method of claim 4, wherein processing the data to be operated according to the verification result comprises:
in response to a case where the unique identifier information of the distributed transaction of the data to be operated is in the list of unique identifier information of active distributed transactions, suspending, by the computing node, a transaction corresponding to the data to be operated.

7. The distributed transaction processing method of claim 6, wherein, after the computing node suspends the transaction corresponding to the data to be operated, the computing node directly operates the data to be operated or directly returns the data to be operated to a client in response to a case where a release message of the unique identifier information of the distributed transaction of the data to be operated synchronized by the global transaction management master node is received within a time threshold.

8. The distributed transaction processing method of claim 6, wherein, after the computing node suspends the transaction corresponding to the data to be operated, the computing node returns a timeout error message to a client in response to a case where a release message of the unique identifier information of the distributed transaction of the data to be operated synchronized by the global transaction management master node is not received within a time threshold.

9. A terminal, comprising a processor and a memory,
the processor is configured to execute one or more computer programs stored in the memory to perform the distributed transaction processing method of any one of claims 1 to 8.

10. A computer-readable storage medium having stored thereon one or more computer programs, which, when executed by one or more processors, cause the one or more processors to perform the distributed transaction processing method of any one of claims 1 to 8.
